# EUROPÄISCHE PATENTSCHRIFT

(11) **EP 2 715 932 B1**
(45) Veröffentlichungstag und Bekanntmachung des Hinweises auf die Patenterteilung: **06.05.2015**
(21) Anmeldenummer: 12725344.1
(22) Anmeldetag: 23.05.2012
(51) Int. Cl.: H02P 29/02, H02P 6/00, H02P 27/06, B62D 5/04, H02H 7/122

(54) **VERFAHREN UND VORRICHTUNG ZUM BETRIEB EINES BÜRSTENLOSEN MOTORS**
METHOD AND DEVICE FOR OPERATING A BRUSHLESS MOTOR
PROCÉDÉ ET DISPOSITIF PERMETTANT DE FAIRE FONCTIONNER UN MOTEUR SANS BALAIS

(30) Priorität: 24.05.2011 DE 102011076406
(43) Veröffentlichungstag der Anmeldung: 09.04.2014
(73) Patentinhaber: Continental Automotive GmbH, 30165 Hannover (DE)
(72) Erfinder: DONNER, Andreas, 60316 Frankfurt (DE); GURZAWSKI, Timo, 63500 Seligenstadt (DE); GYÖRI, Csaba, 65207 Wiesbaden (DE); Sofronescu, Bogdan, lasi city, lasi district (RO)
(86) Internationale Anmeldenummer: PCT/EP2012/059594
(87) Internationale Veröffentlichungsnummer: WO 2012/160092

(56) Entgegenhaltungen:
- WO-A1-03/099632
- DE-A1-102004 023 713
- DE-A1-102007 024 659
- DE-A1-102010 001 241

## Beschreibung

Die vorliegende Erfindung betrifft ein Verfahren zum Betrieb eines bürstenlosen Elektromotors, dessen Wicklungen von einem Wechselrichter mit Hilfe von sechs Schalter angesteuert werden, wobei der Wechselrichter drei Ausgänge aufweist, die den Wicklungen des Elektromotors zugeordnet sind und wobei zwischen den Ausgängen des Wechselrichters und den Wicklungen jeweils ein Leistungshalbleiterschalter angeordnet ist, und wobei eine Erkennungseinheit zum Erkennen von defekten Schaltern, eine Einheit zur Spannungsmessung an den Ausgängen des Wechselrichters und ein Mikrocontroller zum Steuern der Schalter und der Leistungshalbleiterschalter vorgesehen ist. Außerdem betrifft die vorliegende Erfindung eine Vorrichtung zum Betrieb eines bürstenlosen Elektromotors.

Wechselrichter zur Ansteuerung bürstenloser Motoren bestehen in der Regel aus sechs Schaltern. Jeder Schalter kann nach einem Defekt prinzipiell zwei verschiedene Eigenschaften aufweisen: Nicht leitend, das heißt in der geöffneten Schalterstellung blockiert, oder leitend, das heißt in der geschlossenen Schalterstellung blockiert. Ein leitend defekter Schalter ist umgangssprachlich auch als Kurzschluss bekannt. Besonders in sicherheitsrelevanten Anwendungen ist es dann wichtig, den Elektromotor sehr schnell in einem Notbetrieb weiter zu betreiben oder sofort abzuschalten.

Die Verwendung von Leistungshalbleiterschaltern hat gegenüber mechanischen Relais den Nachteil, dass beim Abschalten induktiver Lasten, abhängig von der Höhe des Laststroms und der Induktivität der Last, eine Energiemenge derartiger Höhe freiwerden kann, dass der Leistungshalbleiterschalter im Augenblick des Abschaltens zerstört wird und seine Aufgabe dadurch nicht mehr erfüllen kann. Speziell beim Einsatz für bürstenlose Motoren in sicherheitskritischen Anwendungen, bei denen das Abschalten des Motors im Leistungspfad für eine Schutzfunktion benötigt wird, muss eine Beschädigung der Leistungshalbleiterschalter vermieden werden. Eine sicherheitskritische Anwendung ist die Verwendung eines bürstenlosen Elektromotors in einer elektromechanischen Lenkung eines Kraftfahrzeugs. Die Verwendung von Leistungshalbleiterschaltern wird z.B. in DE102004023713 und DE102007024659 vorgeschlagen.

Für derartige Anwendungen, bei denen die induktive Energie im Lastkreis die zulässige Absorptionsfähigkeit eines Leistungshalbleiterschaltern übersteigt, ist es bekannt, stattdessen ein mechanisches Relais zu verwenden, das gegenüber heute marktüblichen Leistungshalbleiterschaltern bauartbedingt eine deutlich höhere Absorptionsfähigkeit aufweist. Eine weitere Möglichkeit besteht in der Umleitung der beim Abschalten anfallenden Energiemenge in eine Energiesenke wie beispielsweise einer Suppressordiode, die den Leistungshalbleiterschalter entlastet.

Der vorliegenden Erfindung liegt daher die Aufgabe zugrunde, ein Verfahren und eine Vorrichtung darzustellen, bei denen eine Beschädigung der Leistungshalbleiterschalter beim Abschalten induktiver Lasten vermieden wird.

Diese Aufgabe wird durch die Merkmale der unabhängigen Patentansprüche gelöst. Dabei wird nach der Erkennung eines defekten Schalters der Wechselrichter vom Mikrocontroller in der Weise abgeschaltet, dass keine weitere Leistung in die Wicklungen des Elektromotors mehr eingebracht wird und dass die Leistungshalbleiterschalter nacheinander in einer vorab bestimmten Motorwinkellage geöffnet werden.

Vorteilhafte Weiterbildungen sind den Unteransprüchen entnehmbar.

So ist in einer bevorzugten Weiterbildung des erfindungsgemäßen Verfahrens vorgesehen, dass die Motorwinkellagen jeweils einer Wicklung und deren Leistungshalbleiterschalter zugeordnet werden und so gewählt werden, dass die zugeordneten Leistungshalbleitschalter beim Öffnen nicht beschädigt werden. Dazu werden die Motorwinkellagen so gewählt, dass der art den Leistungshalbleiterschaltern anliegende Drainstrom null, nahezu null oder negativ ist.

Dabei ist vorgesehen, dass die in denen die an den Leistungshalbleiterschaltern anliegenden Augenblickswerte der Drainströme, die das beschädigungsfreie Abschalten erlauben, deterministisch abhängig vom Motorwinkel ist. Wesentlich ist, dass eine direkte messtechnische Überwachung der Phasenströme für die Methode nicht zwingend benötigt wird, weil die für den Zweck benötigte Information aus dem gemessenen Motorwinkel bezogen werden kann.

Die genannte Aufgabe wird auch durch eine Vorrichtung gelöst, bei der der Mikrocontroller dazu eingerichtet ist, den Wechselrichter nach der Erkennung eines defekten Schalters vom Mikrocontroller in der Weise abzuschalten, sodass keine weitere Leistung in die Wicklungen des Elektromotors mehr eingebracht wird und dass der Mikrocontroller weiter dazu eingerichtet ist die Leistungshalbleiterschalter nacheinander in einer vorab bestimmten Motorwinkellage zu öffnen.

In einer besonders vorteilhaften Weiterbildung des Erfindungsgegenstandes ist der Mikrocontroller dazu eingerichtet, die Motorwinkellagen jeweils einer Wicklung und deren Leistungshalbleiterschalter zuzuordnen und so zu wählen, dass die zugeordneten Leistungshalbleitschalter beim Öffnen nicht beschädigt werden. Dabei ist der Mikrocontroller dazu eingerichtet, die Motorwinkellagen so zu wählen, dass der an den Leistungshalbleiterschaltern anliegende Drainstrom null, nahezu null oder negativ ist.

Es ist vorgesehen, dass die Leistungshalbleitschalter als Leistungs-MOSFET ausgebildet sind.

Eine weitere vorteilhafte Weiterbildung des Erfindungsgegenstandes sieht vor, dass die Einheit zum Erkennen von defekten Schaltern und die Einheit zur Spannungsmessung an den Ausgängen des Wechselrichters in den Mikrocontroller integriert sind.

Zur Ermittlung der Motorwinkellage ist in einer ersten Alternative ein Motorwinkellagensensor vorgesehen.

In einer zweiten Alternative sind Stromkomparatoren vorgesehen, die den Spannungsabfall über den Leistungshalbleiterschaltern überwachen. Der Mikrocontroller bestimmt mit Hilfe dieser Informationen die Motorwinkellagen.

Die Erfindung wird nachfolgend zweier Ausführungsbeispiele im Zusammenhang mit der beiliegenden Zeichnung näher erläutert. In der Zeichnung zeigen:
- Fig. 1: eine schematische Prinzipdarstellung der Wicklungen eines bürstenlosen Elektromotors, eines Wechselrichters sowie die Leistungshalbleiterschalter als Sicherheitsschaltmittel in einer Konfiguration als "Phasenschaltereinheit";
- Fig. 2a: ein Diagramm mit Motorwinkellagen zum Abschalten des zugeordneten Leistungshalbleiterschalter bei einer positiven Drehrichtung des Elektromotors;
- Fig. 2b: ein Diagramm mit Motorwinkellagen zum Abschalten des zugeordneten Leistungshalbleiterschalter bei einer negativen Drehrichtung des Elektromotors;
- Fig. 3: ein Ablaufdiagramm des erfindungsgemäßen Verfahrens
- Fig. 4: eine schematische Prinzipdarstellung eines zweiten Ausführungsbeispiels mit Leistungshalbleiterschaltern als Sicherheitsschaltmittel in einer Konfiguration als "Sternpunktschaltereinheit" und
- Fig. 5: eine Fig. 1 entsprechende Darstellung ohne Motorwinkellagensensor.

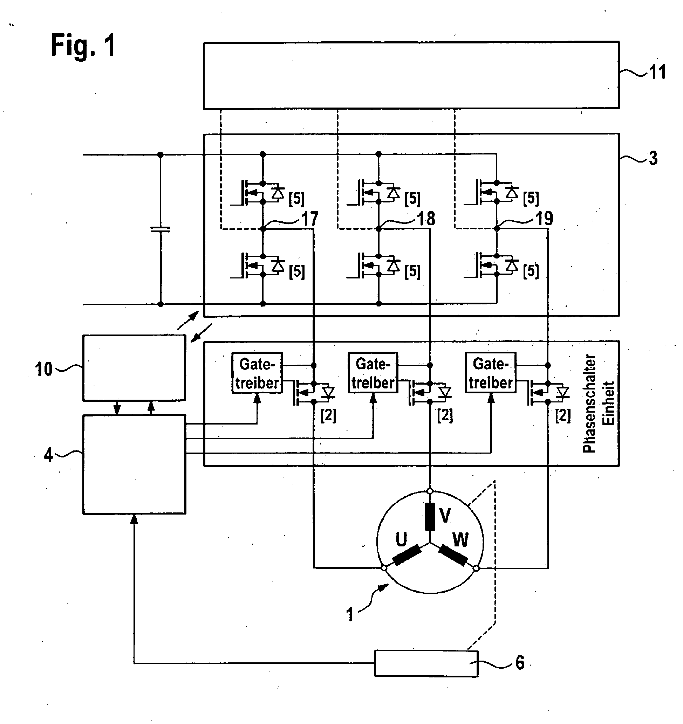

In Fig. 1 ist schematisch ein bürstenloser Elektromotor 1 dargestellt, dessen Wicklungen U, V, W von einem Wechselrichter 3 angesteuert werden. Zu diesem Zweck weist der Wechselrichter 3 sechs Schalter 5 auf, wobei die in Fig. 1 oberen Schalter 5 der positiven Versorgungsspannung und die in Fig. 1 unteren Schalter 5 der negativen Versorgungsspannung zugeordnet sind. Wie Fig. 1 weiter entnehmbar ist, befinden sich zwischen den oberen Schaltern 5, die der positiven Versorgungsspannung zugeordnet sind, und den unteren Schaltern 5, die der negativen Versorgungsspannung zugeordnet sind, Abgreifpunkte 17, 18, 19, an denen die an den Wicklungen U, V, W anliegende Spannung abgegriffen wird und einer Einheit 11 zur Spannungsmessung zugeführt wird. Die Messergebnisse der Einheit 11 zur Spannungsmessung werden einem Mikrocontroller 4 zugeführt, der einerseits die Schalter 5 steuert und andererseits die von der Spannungsmessungseinheit 11 erzeugten Informationen auswertet. Außerdem ist eine Erkennungseinheit 10 zum Erkennen von defekten Schaltern 5 vorgesehen. Die von der Erkennungseinheit 10 erzeugten Informationen werden ebenfalls dem Mikrocontroller 4 zur Auswertung zugeführt. In den Phasenleitungen, die zu den Wicklungen U, V, W führen, sind Leistungshalbleiterschalter 2 angeordnet.

In einer Ausführungsform in der Praxis werden die Schalter 5 durch Halbleiterschalter bzw. Transistoren oder MOSFETs gebildet. Die Erkennungseinheit 10 ist in der Praxis als Brückentreiber ausgebildet und legt an die als Transistoren ausgebildeten Schalter 5 eine Spannung an und kontrolliert, ob die Schalterstellung des Transistors wechselt. Die Einheit 11 zur Spannungsmessung an den Abgreifpunkten 17, 18, 19 ist in der Praxis als Spannungsteiler ausgebildet und ermittelt das Tastverhältnis einer pulsweitenmodulierten Spannung. Das Tastverhältnis entspricht dabei dem Quotienten aus Impulsdauer und Periodendauer.

Jeder Schalter 5 kann prinzipiell zwei verschiedene Arten eines Defekts aufweisen bzw. befindet sich nach einem Defekt grundsätzlich in einer der beiden nachfolgend beschrieben Zustände: Nicht leitend defekt, das heißt in der geöffneten Schalterstellung blockiert, oder leitend defekt, das heißt in der geschlossenen Schalterstellung blockiert. Ein leitend defekter Schalter 5 ist umgangssprachlich auch als Kurzschluss bekannt.

Besonders in sicherheitsrelevanten Anwendungen, wie in einer elektromechanischen Lenkvorrichtung, ist es wichtig, den Elektromotor 1 sehr schnell in einem Notbetrieb weiter zu betreiben oder sofort abzuschalten. Der Fehlerfall des leitend defekten Schalters 5 führt zu einem erhöhten Lenkmoment, da der Fahrzeugführer im Fehlerfall den Elektromotor 1 im Generatorbetrieb bewegt und dabei einen Strom induziert, der der Lenkbewegung am Lenkrad gerade entgegen wirkt. Dieses entgegen der Drehrichtung des Fahrzeugführer wirkende Moment wird im Folgenden Bremsmoment genannt. Durch den Kurzschluss im Wechselrichter 3 wird in einer permanent erregten Synchronmaschine ein drehzahlabhängiges Bremsmoment erzeugt. Durch einen leitend defekten Schalter 5 entsteht durch Induktion ein Stromschluss über die Motorwicklungen U, V, W.

Für den Anwendungsfall des bürstenlosen Elektromotors 1 sind die Phasenanschlüsse des Elektromotors 1 über Leistungshalbleiterschaltern 2 mit den Ausgängen des antreibenden Wechselrichters 3 verbunden. Der Zweck dieser Anordnung ist es, im Falle eines Defekts im Wechselrichter 3 den Elektromotor 1 stromfrei und damit frei von den eben beschriebenen Bremsmomenten zu machen. Dies bezeichnet man auch als Sicherheitsabschaltung. Nach Erkennung eines Defekts im Wechselrichter 3 durch den Mikrocontroller 4 wird zunächst der Wechselrichter 3 abgeschaltet, d.h. die Schalter 5 geöffnet sodass keine weitere elektrische Leistung mehr in den Elektromotor 1 eingebracht wird. Sofern der Elektromotor 1 entweder durch Trägheit oder durch Antrieb von außen noch in rotierendem Zustand ist, baut sich durch die Gleichrichtung der Induktionsspannung des Elektromotor 1 über parasitäre Dioden und einen als leitend defekt anzunehmenden Schalter 5 innerhalb des Wechselrichters 3 periodisch eine Stromkuppe auf, die das unerwünschtes Bremsmoment hervorruft. Die Abschaltung der Leistungshalbleiterschalter 2 in den Phasenleitungen unterbindet dieses. Damit die Leistungshalbleiterschalter 2 dabei nicht durch eine unzulässig hohe induktive Energiemenge aus dem Elektromotor 1 beschädigt werden, werden diese individuell in Fenstern bestimmter Motorwinkellagen ϕ_{U}, ϕ_{V}, ϕ_{W} abgeschaltet, bei deren Durchschreiten der Stromverlauf in den jeweiligen betreffenden Wicklung U, V, W für den zugeordneten Leistungshalbleiterschalter 2 unschädlich ist. Die Leistungshalbleiterschalter 2 sind als Leistungs-MOSFET ausgeführt und kurzfristige Werte des Drainstroms I_{D} von Null, negativ oder gering positiv sind unschädlich. Dabei ist es bei diesem Verfahren kennzeichnend, dass die geeigneten Motorwinkellagefenster ϕ_{U}, ϕ_{V}, ϕ_{W} unabhängig vom Ort des leitend defekten Schalters 5 im Wechselrichter 3 immer gleich bleiben und nur von der Drehrichtung des Elektromotors 1 abhängen. Es genügt somit das gezielte Abschalten der einzelnen Leistungshalbleiterschalter 2 anhand der Erkennung der zulässigen Motorwinkellagefenster ϕ_{U}, ϕ_{V}, ϕ_{W} durch den Mikrocontroller 4. Die Erfassung der Motorwinkellage ϕ_{U}, ϕ_{V}, ϕ_{W} wird mit Hilfe eines Motorwinkellagensensors 6 vorgenommen. Die Erfassung der Motorwinkellage ϕ_{U}, ϕ_{V}, ϕ_{W} ist für die Ansteuerung eines bürstenlosen Elektromotors 1 notwendig. Ein weiterer Sensor zur Durchführung des hier beschriebenen Verfahrens ist somit nicht notwendig.

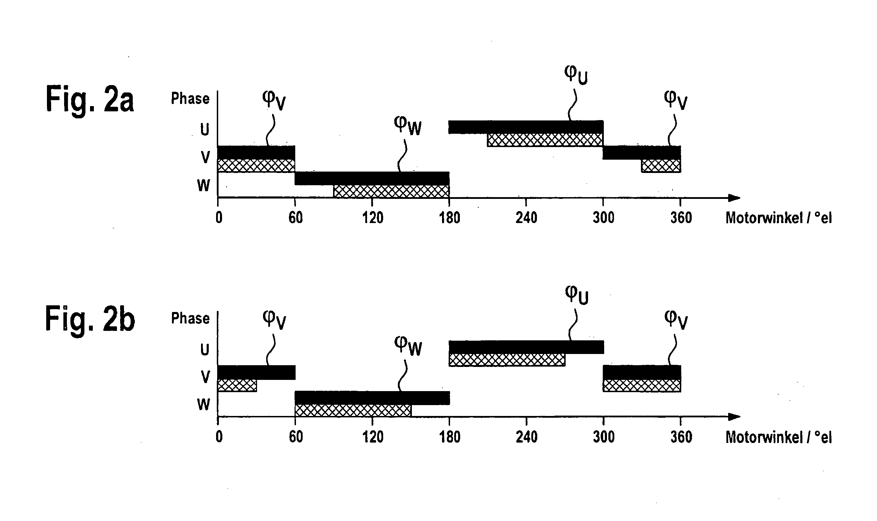

Wie eben erwähnt sind die geeigneten Motorwinkellagefenster ϕ_{U}, ϕ_{V}, ϕ_{W} unabhängig vom Ort des leitend defekten Schalters 5 im Wechselrichter 3. Die geeigneten Motorwinkellagen ϕ_{U}, ϕ_{V}, ϕ_{W} bleiben vielmehr immer gleich. Dieser Zusammenhang ist in Fig. 2 dargestellt.

Bei einem dreiphasigen BLDC Motor sind die Motorwinkellagefenster, in denen die durch die induzierten Spannungen und bedingt durch einen leitend defekten Schalter 5 im Wechselrichter 3 hervorgerufenen Ströme in den einzelnen Phasen Null sind, theoretisch bis zu 120° breit. Definiert man den Motorwinkel ϕ=0° dort, wo die induzierte Spannung des von außen angetriebenen Motors 1 der Phase U ihr Maximum hat, liegen die stromfreien Winkelfenster für die drei Phasen in den Intervallen ϕ_{U}=[300°; -60°], ϕ_{V}=[60°;. 180°] und ϕ_{W}=[180°; 300°]. Diese Werte gelten für idealisierte Verhältnisse, bei denen die durch die mechanische Drehzahl N des Motors sich ergebende elektrische Periodenzeit TPER=1/(N*Polpaarzahl) klein bleibt gegenüber der Zeitkonstanten der Phasenimpedanz τPH=L/R und daher die Ströme und Spannungen im Motor noch annähernd deckungsgleich verlaufen. In der Praxis sind diese idealisierten Verhältnisse jedoch nicht zwingend gegeben. So muss berücksichtigt werden, dass je nach Motorkennwerten und der höchsten zu berücksichtigender Drehzahl die Motorwinkellagefenster kleiner als 120° und außerdem drehrichtungsabhängig werden können, wie es in Fig. 2a und 2b dargestellt ist. Die Grenzwerte der Motorwinkellagefenster sind für den konkreten Anwendungsfall zu bemessen. An der grundsätzlichen Methode des Abschaltens innerhalb vorbestimmter Motorwinkellagefenster ändert sich hierdurch jedoch nichts.

Die Motorwinkellagefenster ϕ_{U}, ϕ_{V}, ϕ_{W} für das Abschalten sind leider nicht für jede Anwendung gleich. Die durch die von außen erzwungene Rotation der Motorwelle erzeugt zwar stets die drei induzierten Spannungen mit dem um jeweils 120° zueinander verschobenen Sinusverläufen entsprechend einem Dreiphasensystem für einen dreiphasigen bürstenlosen Elektromotor 1 und diese dann in der Folge zum Aufbau der Stromkuppen führen. Allerdings verlaufen diese Stromkuppen nicht deckungsgleich zu den induzierten Spannungen, sondern erleiden bedingt durch die komplexe Impedanz der Motorphasen U, V, W erstens einen Zeitverzug und zweitens eine Formverzerrung bedingt durch die äußere Randbedingung mit dem Kurzschluss in dem Wechselrichter 3. Desweiteren verbreitern sich die Stromkuppen mit steigender Motordrehzahl N und die Motorwinkellagefenster ϕ_{U}, ϕ_{V}, ϕ_{W} werden entsprechend kleiner. Letztlich ist Bestimmung der Motorwinkellagefenster ϕ_{U}, ϕ_{V}, ϕ_{W} eine Bemessungsaufgabe, die die Kennwerte des verwendeten Elektromotors sowie die maximal zu betrachtende Drehzahl N berücksichtigt. Auch die für die Leistüngshalbleiterschalter 2 zulässige Energiemenge ist ein Kriterium: Je höher diese ist, desto grösser darf der kurzfristige Wert des Phasenstroms beim Abschalten noch sein, was beim maximieren der Motorwinkellagefenster ϕ_{U}, ϕ_{V}, ϕ_{W} hilfreich ist.

In Fig. 2a und 2b sind als schwarz durchgezogene Blöcke die idealisierten Verhältnisse bei einem Motor mit sehr kleinem Verhältnis von Phaseninduktivität zu Phasenwiderstand dargestellt. Unter diesen Idealbedingungen beträgt das Motorwinkellagefenster ϕ_{U} für die Wicklung U von 300° bis 60°, für die Wicklung V entsprechend das Motorwinkellagefenster ϕ_{V} von 60° bis 180° und für die Wicklung W Motorwinkellagefenster ϕ_{W} von 180° bis 300°. Darunter sind als schraffierte Blöcke die oben kurz beschriebenen prinzipiellen Verkürzungen der Motorwinkellagefenster ϕ_{U}, ϕ_{V}, ϕ_{W} für Motoren mit hohem L/R Verhältnis und hoher Drehzahl dargestellt.

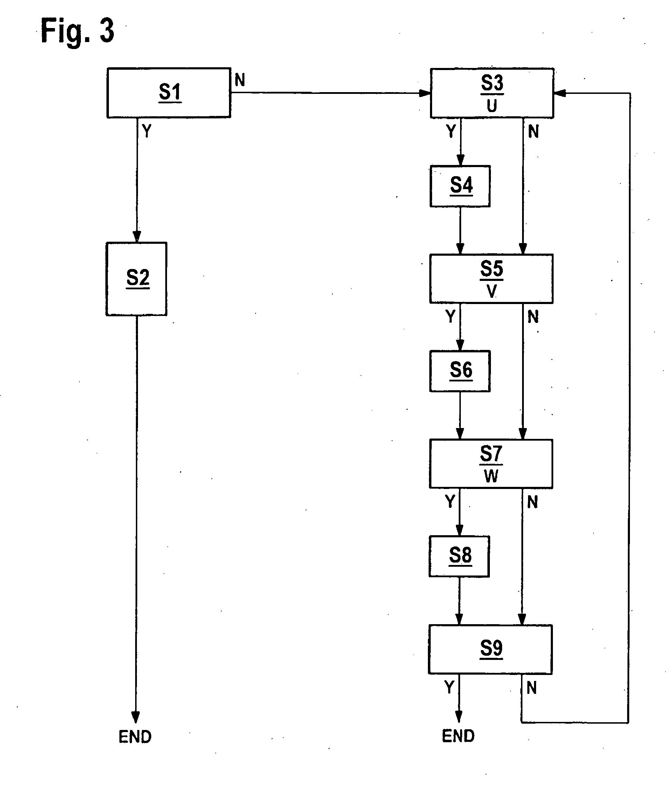

In Fig. 3 ist ein Ablaufdiagramm zur Durchführung des hier beschriebenen Verfahrens dargestellt. Im Schritt S1 wird geprüft, ob die Drehzahl des Elektromotors 1 ausreichend niedrig ist und die Induktionsströme dementsprechend ausreichend gering sind. Falls dies der Fall ist, werden im Schritt S2 alle Leistungshalbleiterschalter 2 für alle Wicklungen U, V, W geöffnet und das Verfahren ist beendet. Für den schwerwiegenderen Fall, dass die Induktionsströme nicht tolerierbar gering sind, wird im Schritt S3 geprüft, ob sich die Motorwinkellage ϕ innerhalb des Abschaltfensters ϕ_{U} für die Phase U befindet. Sofern dies zutrifft, wird der der Phase U zugeordnete Leistungshalbleiterschalter 2 im Schritt S4 geöffnet.

Im Schritt S5 wird entsprechend geprüft, ob sich die Motorwinkellage ϕ im geeigneten Motorwinkellagefenster ϕ_{V} befindet. Falls dies der Fall ist, wird der zugeordnete Leistungshalbleiterschalter 2 geöffnet (Schritt S6). Anschließend wird das Verfahren mit dem Schritt S7 fortgeführt: In diesem Schritt wird geprüft, ob sich die Motorwinkellage ϕ im geeigneten Motorwinkellagefenster ϕ_{W} befindet und bei positive Vorliegen der der Wicklung W zugeordnete Leistungshalbleiterschalter 2 geöffnet. In Schritt S9 wird geprüft, ob die Entscheidungen in allen Schritten S3, S5, S7 einmal positiv waren und damit also alle Leistungshalbleiterschalter geöffnet sind. Solange dies nicht der Fall ist, erfolgt die Rückverzweigung zu S3.

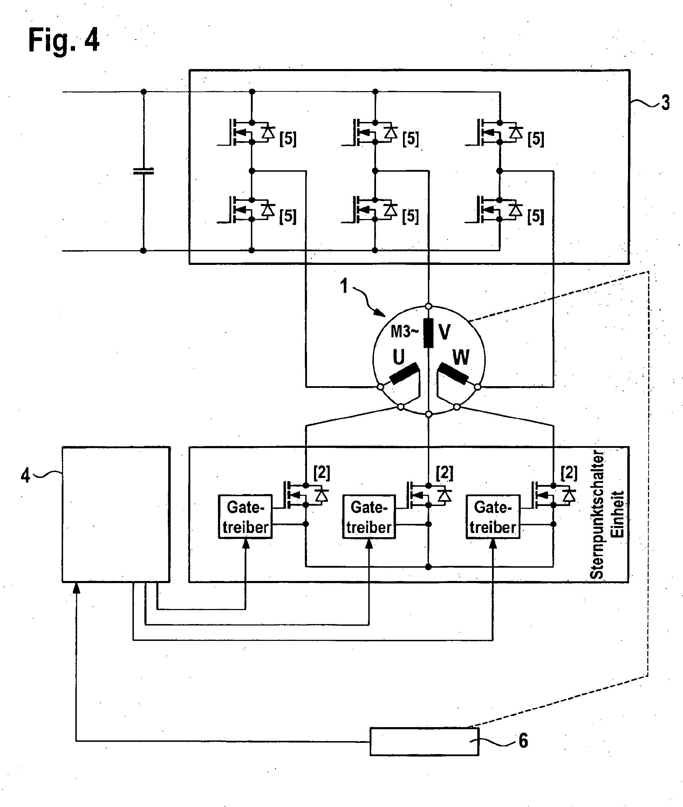

In Fig. 4 ist eine zweite Ausführungsform dargestellt, die eine Topologie der Leistungshalbleiterschalter 2 als "Sternpunktschalter" aufweist: Die Leistungshalbleiterschalter 2 sind wiederum als Leistungs-MOSFET ausgebildet und verbinden die Endanschlüsse der Motorphasen U, V, W zum "Sternpunkt". An der Nutzung der Motorwinkellage ϕ zum individuellen Abschalten der Leistungshalbleiterschalter 2 innerhalb der geeigneten Motorwinkellagefenster ϕ_{U}, ϕ_{V}, ϕ_{W} ändert sich gegenüber der in Fig. 1 dargestellten Ausführungsform nichts.

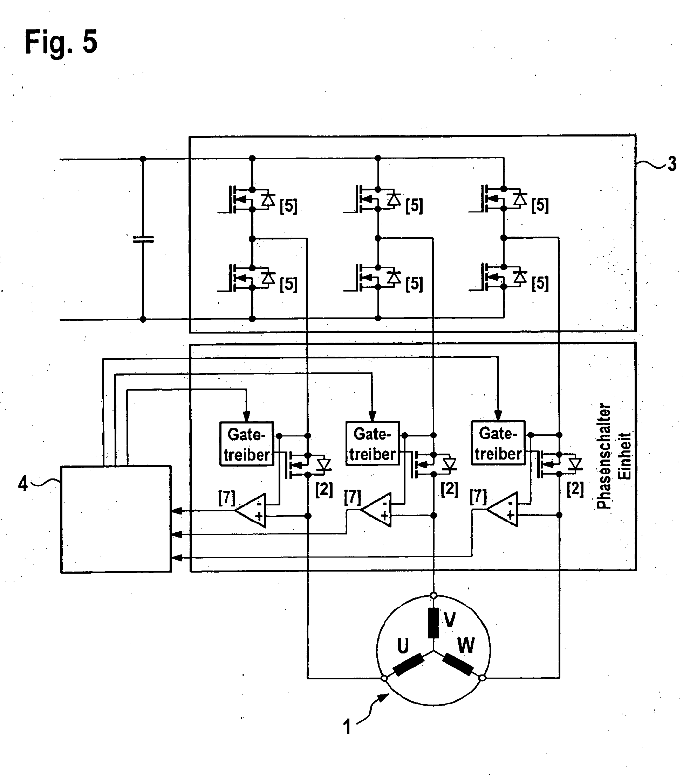

Fig. 5 zeigt als Alternative zur Nutzung der Motorwinkellageinformation ϕ durch Überwachung der Stromrichtung in jeder Motorphase U, V, W. In der hier dargestellten Ausführungsform ist die Überwachung der Stromrichtung mit Spannungskomparatoren 7 realisiert, die den Spannungsabfall über den Leistungshalbleiterschaltern 2 überwachen und so die Information über die Stromrichtung in jeder Motorphase U, V, W bereitstellen, die der Mikrocontroller 4 zum individuellen Abschalten der Leistungshableiterschalter 2 im richtigen Zeitfenster, d. h. während nicht zerstörungsgefährlichen Stromrichtung, benötigt.

Alternativ hierzu kann in Systemen, die eine "echte" Strommessung, z. B. mittels Shunts die Phasenströme für Regelungszwecke nutzen, diese Phasenstrominformation ebenfalls für die Erkennung der Zeitfenster der nicht zerstörungsgefährlichen Stromrichtung ausgenutzt werden.

Die Anwendung des beschriebenen Verfahrens erlaubt die Verwendung von Leistungshalbleiterschaltern 2 als Sicherheitseigenschaft in einem System zum Betrieb eines bürstenlosen Elektromotors 1, auch wenn die durch die Höhe der Motorinduktivitäten und -ströme eines solchen Systems sich maximal ergebende mögliche induktive Energiemenge die Absorptionsfähigkeit verfügbarer und/oder wirtschaftlich vertretbarer Leistungshalbleiterschalter übersteigt. Der Einsatz eines mechanischen Relais, der vielfach wegen mangelnder Zuverlässigkeit, Abnutzungseigenschaften, Feuchteempfindlichkeit, veränderlicher Kontakteigenschaften etc. nicht erwünscht ist, kann damit umgangen und die zuweilen auch konstruktionsbedingt eher bevorzugte Lösung mit Leistungshalbleiterschaltern zum Einsatz gebracht werden, ohne zusätzliche Schaltmittel zur externen Energieabsorption wie Suppressordioden oder Einrichtungen zur Strommessung einführen zu müssen

## Patentansprüche

1. Verfahren zum Betrieb eines bürstenlosen Elektromotors (1), dessen Wicklungen (U, V, W) von einem Wechselrichter (3) mit Hilfe von sechs Schalter (5) angesteuert werden, wobei der Wechselrichter (3) drei Ausgänge (17, 18, 19) aufweist, die den Wicklungen (U, V, W) des Elektromotors (1) zugeordnet sind und wobei zwischen den Ausgängen (17, 18, 19) des Wechselrichters (3) und den Wicklungen (U, V, W) jeweils ein Leistungshalbleiterschalter (2) angeordnet ist, und wobei eine Erkennungseinheit (10) zum Erkennen von defekten Schaltern (5), eine Einheit (11) zur Spannungsmessung an den Ausgängen (17, 18, 19) des Wechselrichters (3) und ein Mikrocontroller (4) zum Steuern der Schalter (5) und der Leistungshalbleiterschalter (2) vorgesehen ist, wobei nach der Erkennung eines defekten Schalters (5) der Wechselrichter (3) vom Mikrocontroller (4) in der Weise abgeschaltet wird, dass keine weitere Leistung in die Wicklungen (U, V, W) des Elektromotors (1) mehr eingebracht wird, **dadurch gekennzeichnet, dass** die Leistungshalbleiterschalter (2) nacheinander in einer vorab bestimmten Motorwinkellage (ϕ_{U}, ϕ_{V}, ϕ_{W}) geöffnet werden.

2. Verfahren nach Anspruch 1, **dadurch gekennzeichnet, dass** die Motorwinkellagen (ϕ_{U}, ϕ_{V}, ϕ_{W}) jeweils einer Wicklung (U, V, W) und deren Leistungshalbleiterschalter (2) zugeordnet werden und so gewählt werden, dass die zugeordneten Leistungshalbleitschalter (2) beim Öffnen nicht beschädigt werden.

3. Verfahren nach Anspruch 1 oder 2, **dadurch gekennzeichnet, dass** die Motorwinkellagen (ϕ_{U}, ϕ_{V}, ϕ_{W}) so gewählt werden, dass der an den Leistungshalbleiterschaltern (2) anliegende Drainstrom (I_{D}) null oder nahezu null ist.

4. Verfahren nach Anspruch 1 oder 2, **dadurch gekennzeichnet, dass** die Motorwinkellagen (ϕ_{U}, ϕ_{V}, ϕ_{W}) so gewählt werden, dass der an den Leistungshalbleiterschaltern (2) anliegende Drainstrom (I_{D}) negativ ist.

5. Verfahren nach einem der vorhergehenden Ansprüche, **dadurch gekennzeichnet, dass** die Motorwinkellagen (ϕ_{U}, ϕ_{V}, ϕ_{W}) unabhängig vom Ort des defekten Schalters (5) und ausschließlich in Abhängigkeit der Drehrichtung des Elektromotors (1) bestimmt werden.

6. Vorrichtung zum Betrieb eines bürstenlosen Elektromotors (1), dessen Wicklungen (U, V, W) von einem Wechselrichter (3) mit Hilfe von sechs Schalter (5) angesteuert werden, wobei der Wechselrichter (3) drei Ausgänge (17, 18, 19) aufweist, die den Wicklungen (U, V, W) des Elektromotors (1) zugeordnet sind und wobei zwischen den Ausgängen (17, 18, 19) des Wechselrichters (3) und den Wicklungen (U, V, W) jeweils ein Leistungshalbleiterschalter (2) angeordnet ist, und wobei eine Erkennungseinheit (10) zum Erkennen von defekten Schaltern (5), eine Einheit (11) zur Spannungsmessung an den Ausgängen (17, 18, 19) des Wechselrichters (3) und ein Mikrocontroller (4) zum Steuern der Schalter (5) und der Leistungshalbleiterschalter (2) vorgesehen ist, wobei der Mikrocontroller (4) dazu eingerichtet ist, den Wechselrichter (3) nach der Erkennung eines defekten Schalters (5) vom Mikrocontroller (4) in der Weise abzuschalten, sodass keine weitere Leistung in die Wicklungen (U, V, W) des Elektromotors (1) mehr eingebracht wird, **dadurch gekennzeichnet, dass** der Mikrocontroller (4) weiter dazu eingerichtet.ist die Leistungshalbleiterschalter (2) nacheinander in einer vorab bestimmten Motorwinkellage (ϕ_{U}, ϕ_{V}, ϕ_{W}) zu öffnen.

7. Vorrichtung nach Anspruch 6, **dadurch gekennzeichnet, dass** der Mikrocontroller (4) dazu eingerichtet ist, die Motorwinkellagen (ϕ_{U}, ϕ_{V}, ϕ_{W}) jeweils einer Wicklung (U, V, W) und deren Leistungshalbleiterschalter (2) zuzuordnen und so zu wählen, dass die zugeordneten Leistungshalbleitschalter (2) beim Öffnen nicht beschädigt werden.

8. Vorrichtung nach Anspruch 6 oder 7, **dadurch gekennzeichnet, dass** der Mikrocontroller (4) dazu eingerichtet ist, die Motorwinkellagen (ϕ_{U}, ϕ_{V}, ϕ_{W}) so zu wählen, dass der an den Leistungshalbleiterschaltern (2) anliegende Drainstrom (I_{D}) null, nahezu null oder negativ ist.

9. Vorrichtung nach einem der Ansprüche 6 bis 8, **dadurch gekennzeichnet, dass** die Leistungshalbleitschalter (2) als Leistungs-MOSFET ausgebildet sind.

10. Vorrichtung nach einem der Ansprüche 6 bis 9, **dadurch gekennzeichnet, dass** die Einheit (10) zum Erkennen von defekten Schaltern (5) und die Einheit (11) zur Spannungsmessung an den Ausgängen (17, 18, 19) des Wechselrichters (3) in den Mikrocontroller (4) integriert sind.

11. Vorrichtung nach einem der Ansprüche 6 bis 9, **dadurch gekennzeichnet, dass** ein Motorwinkellagensensor (6) zur Ermittlung der Motorwinkellage (ϕ) vorgesehen ist.

12. Vorrichtung nach einem der Ansprüche 6 bis 9, **dadurch gekennzeichnet, dass** Stromkomparatoren (7) vorgesehen sind, die den Spannungsabfall über den Leistungshalbleiterschaltern (2) überwachen und dass der Mikrocontroller (4) mit Hilfe dieser Informationen die Motorwinkellagen (ϕ_{U}, ϕ_{V}, ϕ_{W}) bestimmt.

## Claims

1. Method for operating a brushless electric motor (1) the windings (U, V, W) of which are controlled by an AC converter (3) with the aid of six switches (5), wherein the AC converter (3) comprises three outputs (17, 18, 19) that are allocated to the windings (U, V, W) of the electric motor (1) and wherein a power semiconductor switch (2) is arranged in each case between the outputs (17, 18, 19) of the AC converter (3) and the windings (U, V, W) and wherein a detection unit (10) for detecting defective switches (5), a unit (11) for measuring the voltage at the outputs (17, 18, 19) of the AC converter (3) and a microcontroller (4) for controlling the switches (5) and the power semiconductor switches (2) are provided, wherein after detecting a defective switch (5), the AC converter (3) is switched off by the microcontroller (4) in such a manner that power is no longer introduced into the windings (U, V, W) of the electric motor (1), **characterized in that** the power semiconductor switches (2) are opened in succession in a previously defined motor position angle (ϕ_{U}, ϕ_{V}, ϕ_{W}).

2. Method according to Claim 1, **characterized in that** the motor position angles (ϕ_{U}, ϕ_{V}, ϕ_{W}) are allocated in each case to a winding (U, V, W) and to the power semiconductor switch (2) thereof and are selected in such a manner that the allocated power semiconductor switches (2) are not damaged during the opening process.

3. Method according to Claim 1 or 2, **characterized in that** the motor position angles (ϕ_{U}, ϕ_{V}, ϕ_{W}) are selected in such a manner that the drain current (I_{D}) prevailing at the power semiconductor switches (2) is zero or almost zero.

4. Method according to Claim 1 or 2, **characterized in that** the motor position angles (ϕ_{U}, ϕ_{V}, ϕ_{W}) are selected in such a manner that the drain current (I_{D}) prevailing at the power semiconductor switches (2) is negative.

5. Method according to any one of the preceding claims, **characterized in that** the motor position angles (ϕ_{U}, ϕ_{V}, (ϕ_{W}) are not dependent upon the position of the defective switch (5) and are defined solely in dependence upon the rotation direction of the electric motor (1).

6. Device for operating a brushless electric motor (1) the windings (U, V, W) of which are controlled by an AC converter (3) with the aid of six switches (5), wherein the AC converter (3) comprises three outputs (17, 18, 19) that are allocated to the windings (U, V, W) of the electric motor (1) and wherein a power semiconductor switch (2) is arranged in each case between the outputs (17, 18, 19) of the AC converter (3) and the windings (U, V, W) and wherein a detection unit (10) for detecting defective switches (5), a unit (11) for measuring the voltage at the outputs (17, 18, 19) of the AC converter (3) and a microcontroller (4) for controlling the switches (5) and the power semiconductor switches (2) are provided, wherein the microcontroller (4) is designed so as to switch off the AC converter (3) after the detection of a defective switch (5) by the microcontroller (4) in such a manner that power is no longer introduced into the windings (U, V, W) of the electric motor (1), **characterized in that** the microcontroller (4) is further designed so as to open the power semiconductor switches (2) in succession in a previously defined motor position angle (ϕ_{U}, ϕ_{V}, ϕ_{W}).

7. Device according to Claim 6, **characterized in that** the microcontroller (4) is designed so as to allocate the motor position angles (ϕ_{U}, ϕ_{V}, ϕ_{W}) in each case to a winding (U, V, W) and to the power semiconductor switch (2) thereof and to select said power semiconductor switches in such a manner that the allocated power semiconductor switches (2) are not damaged during the opening process.

8. Device according to Claim 6 or 7, **characterized in that** the microcontroller (4) is designed so as to select the motor position angles (ϕ_{U}, ϕ_{V}, ϕ_{W}) in such a manner that the drain current (I_{D}) prevailing at the power semiconductor switches (2) is zero, almost zero or negative.

9. Device according to any one of Claims 6 to 8 **characterized in that** the power semiconductor switches (2) are embodied as power MOSFET transistors.

10. Device according to any one of Claims 6 to 9 **characterized in that** the unit (10) for detecting defective switches (5) and the unit (11) for measuring voltage at the outputs (17, 18, 19) of the AC converter (3) are integrated into the microcontroller (4).

11. Device according to any one of Claims 6 to 9, **characterized in that** a motor position angle sensor (6) is provided for determining the motor position angle (ϕ).

12. Device according to any one of Claims 6 to 9, **characterized in that** current comparators (7) are provided, which current comparators monitor the voltage drop across the power semiconductor switches (2), and that the microcontroller (4) determines the motor position angles (ϕ_{U}, ϕ_{V}, ϕ_{W}) with the aid of this information.

## Revendications

1. Procédé de conduite d'un moteur électrique (1) sans balais dont les enroulements (U, V, W) sont commandés par un onduleur (3) à l'aide de six commutateurs (5),
l'onduleur (3) présentant trois sorties (17, 18, 19) qui sont associées aux enroulements (U, V, W) du moteur électrique (1) et un commutateur semi-conducteur de puissance (2) étant disposé entre chacune des sorties (17, 18, 19) de l'onduleur (3) et les enroulements (U, V, W),
une unité de détection (10) détectant des commutateurs défectueux (5),
une unité (11) mesurant la tension appliquée sur les sorties (17, 18, 19) de l'onduleur (3) et
un microcontrôleur (4) commandant les commutateurs (5) et les commutateurs semi-conducteurs de puissance (2) étant prévus,
l'onduleur (3) étant débranché par le microcontrôleur (4) après la détection d'un commutateur défectueux (5) de telle sorte qu'aucune autre puissance ne soit plus injectée dans les enroulements (U, V, W) du moteur électrique (1),
**caractérisé en ce que**
les commutateurs semi-conducteurs de puissance (2) sont ouverts successivement dans une position angulaire préalablement définie (ϕ_{U}, ϕ_{V}, ϕ_{W}) du moteur.

2. Procédé selon la revendication 1, **caractérisé en ce que** chacune des positions angulaires (ϕ_{U}, ϕ_{V}, ϕ_{W}) du moteur est associée à un enroulement (U, V, W) semi-conducteur de puissance (2) et est sélectionnée de telle sorte que les commutateurs semi-conducteurs de puissance (2) associés ne soient pas endommagés lors de leur ouverture.

3. Procédé selon les revendications 1 ou 2, **caractérisé en ce que** les positions angulaires (ϕ_{U}, ϕ_{V}, ϕ_{W}) du moteur sont sélectionnées de telle sorte que le courant de drain (I_{D}) appliqué sur les commutateurs semi-conducteurs de puissance (2) soit nul ou pratiquement nul.

4. Procédé selon les revendications 1 ou 2, **caractérisé en ce que** les positions angulaires (ϕ_{U}, ϕ_{V}, ϕ_{W}) du moteur sont sélectionnées de telle sorte que le courant de drain (I_{D}) appliqué sur les commutateurs semi-conducteurs de puissance (2) soit négatif.

5. Procédé selon l'une des revendications précédentes, **caractérisé en ce que** les positions angulaires (ϕ_{U}, ϕ_{V}, ϕ_{W}) du moteur sont définies indépendamment de l'emplacement du commutateur (5) défectueux et exclusivement en fonction du sens de rotation du moteur électrique (1).

6. Dispositif de conduite d'un moteur électrique (1) sans balais dont les enroulements (U, V, W) sont commandés par un onduleur (3) à l'aide de six commutateurs (5),
l'onduleur (3) présentant trois sorties (17, 18, 19) qui sont associées aux enroulements (U, V, W) du moteur électrique (1) et un commutateur semi-conducteur de puissance (2) étant disposé entre chacune des sorties (17, 18, 19) de l'onduleur (3) et les enroulements (U, V, W),
une unité de détection (10) détectant des commutateurs défectueux (5),
une unité (11) mesurant la tension appliquée sur les sorties (17, 18, 19) de l'onduleur (3) et
un microcontrôleur (4) commandant les commutateurs (5) et les commutateurs semi-conducteurs de puissance (2) étant prévus,
le microcontrôleur (4) étant conçu pour débrancher l'onduleur (3) après la détection d'un commutateur défectueux (5) par le microcontrôleur (4) de telle sorte qu'aucune puissance ne soit plus injectée dans les enroulements (U, V, W) du moteur électrique (1), **caractérisé en ce que**
le microcontrôleur (4) est en outre conçu pour ouvrir successivement les commutateurs semi-conducteurs de puissance (2) dans une position angulaire (ϕ_{U}, ϕ_{V}, ϕ_{W}) du moteur préalablement définie.

7. Ensemble selon la revendication 6, **caractérisé en ce que** le microcontrôleur (4) est conçu pour associer chacune des positions angulaires (ϕ_{U}, ϕ_{V}, ϕ_{W}) du moteur à un enroulement (U, V, W) et à son commutateur semi-conducteur de puissance (2) de telle sorte que les commutateurs semi-conducteurs de puissance (2) associés ne soient pas endommagés lors de l'ouverture.

8. Ensemble selon les revendications 6 ou 7, **caractérisé en ce que** le microcontrôleur (4) est conçu pour sélectionner les positions angulaires (ϕ_{U}, ϕ_{V}, ϕ_{W}) du moteur de telle sorte que le courant de drain (I_{D}) appliqué sur les commutateurs semi-conducteurs de puissance (2) soit nul, pratiquement nul ou négatif.

9. Ensemble selon l'une des revendications 6 à 8, **caractérisé en ce que** les commutateurs semi-conducteurs de puissance (2) sont configurés comme MOSFET de puissance.

10. Ensemble selon l'une des revendications 6 à 9, **caractérisé en ce que** l'unité (10) de détection de commutateurs (5) défectueux et l'unité (11) de mesure de tension présente sur les sorties (17, 18, 19) de l'onduleur (3) sont intégrés dans le microcontrôleur (4).

11. Ensemble selon l'une des revendications 6 à 9, **caractérisé en ce qu'**un capteur (6) de position angulaire du moteur est prévu pour déterminer la position angulaire (ϕ) du moteur.

12. Ensemble selon l'une des revendications 6 à 9, **caractérisé en ce que** des comparateurs (7) de courant sont prévus pour surveiller la chute de tension aux bornes des commutateurs semi-conducteurs de puissance (2) et **en ce que** le microcontrôleur (4) définit les positions angulaires (ϕ_{U}, ϕ_{V}, ϕ_{W}) du moteur à l'aide de ces informations.
